Europäisches Patentamt

European Patent Office

Office européen des brevets

(11) Publication number: **0 291 065**
**A2**

# EUROPEAN PATENT APPLICATION

(21) Application number: **88107692.1**

(22) Date of filing: **13.05.88**

(51) Int. Cl.4: **B32B 27/08 , B32B 27/36**

(30) Priority: **14.05.87 US 50166**
**26.06.87 US 67672**

(43) Date of publication of application:
**17.11.88 Bulletin 88/46**

(84) Designated Contracting States:
**AT BE CH DE ES FR GB GR IT LI LU NL SE**

(71) Applicant: **PRESTO PRODUCTS,**
**INCORPORATED**
**670 North Perkins Street**
**Appleton Wisconsin 54913(US)**

(72) Inventor: **Winter, John P.**
**221 East Circle Street**
**Appleton Wisconsin 54911(US)**

(74) Representative: **Abitz, Walter, Dr.-Ing. et al**
**Abitz, Morf, Gritschneder, Freiherr von**
**Wittgenstein Postfach 86 01 09**
**D-8000 München 86(DE)**

(54) **Nonoriented polyester films for lidding stock.**

(57) A coextruded heat sealable film made with nonoriented polyester is disclosed, in one aspect the polyester including from about 1% to about 5% of a polyolefin, LLDPE being preferred; and in another aspect the polyester comprising a resin which in film form has a tensile strength of 7,000 psi or more. The heat sealable layers include modified polyolefin and copolyester. The heat sealable film can be laminated with aluminum foil, paper, etc. to form a composite which is heat sealable, useful in pouches and lidding stock.

FIG.1

EP 0 291 065 A2

Xerox Copy Centre

# NONORIENTED POLYESTER FILMS FOR LIDDING STOCK

## CROSS REFERENCE TO RELATED APPLICATIONS

This application is a continuation-in-part of copending Application Serial No. 07/050,166, entitled "Tough Nonoriented Polyester Films," filed May 14, 1987, which in turn is a continuation-in-part of copending Application Serial No. 06/759,391, entitled "Polyester/Copolyester Coextruded Packaging Film," filed July 26, 1985.

## BACKGROUND OF THE INVENTION

The present invention relates to films made of nonoriented polyester, and more specifically to nonoriented coextruded films which further include a heat seal layer and are especially useful in producing lidding stock.

Biaxially oriented polyethylene terephthalate, commonly referred to as "oriented polyester" or "OPET", is a common packaging film with over 200 million lbs. used annually. OPET is used for a wide variety of packaging applications, both alone and in combination with other materials (lamination) such as snack food packaging, adhesive labels, lidding, pouches, medical device packaging, and packaging for luncheon meat, cheese, bacon, and the like.

OPET films are manufactured by an orientation process utilizing tenter frame or "double bubble" techniques. Tentering of plastic films is illustrated in U.S. Patent No. 2,823,421 and double-bubble orientation is illustrated in U.S. Patent No. 3,555,604. U.S. Patent Nos. 4,141,736 and 4,207,363 describe oriented films made using the tenter and double bubble processes, respectively. The orientation process comprises the steps of (1) extruding a thick web and cooling to a solid state; (2) precise reheating of film to the "orientation" temperature, (3) stretching the film in both longitudinal and transverse directions, and (4) reheating the film to relieve internal stresses. The process of orientating polyester is very complicated, requiring very expensive equipment and several highly skilled operators.

This is in contrast to the process used to make many other commodity plastic packaging films such as polyethylene. Polyethylene film is commonly produced by blown or cast film extrusion techniques. Such films, while being easier to make, do not have the properties of toughness or stiffness which make polyester a favored packaging film for use in flexible packaging applications.

Prior to this invention and recent developments of new polyester resins, polyester film produced without orientation yielded a very brittle film of limited use in flexible packaging. Various modifications have been made to nonoriented polyester films to improve its properties. One example where the polyester is modified to improve its processability in slow cooling of thick films is disclosed in U.S. Patent No. 4,175,147. This patent discloses single layer nonoriented films comprised of 97.5% to 99.9% w/w of PET blended with 2.5%-0.1% of polycarbonate. Such films, however, are not described as having any toughness above that of nonoriented 100% PET films of similar thicknesses and intrinsic viscosities.

Oriented polyester films often include a heat sealant layer, and are then used in many flexible packaging applications. Oriented heat sealable polyester films are commercially available whereby the heat sealant is applied as a coating. OL MYLAR and SCOTCHPAK are examples of heat sealable OPET films having the heat sealant applied as a coating. OL MYLAR is a registered trademark of E.I. DuPont de Neumours and Company. SCOTCHPAK is a registered trademark of The 3M Company.

Most heat seal coatings consist of a polymer dissolved in a solvent such as methyl ethyl ketone, toluene or ethyl acetate. The solutions are applied as a dispersion. The solvent is subsequently evaporated by passing the web through an oven. This necessitates the need for disposing of or recovering the often hazardous solvents. Furthermore, often a small amount of the solvent remains with the coating, commonly referred to as "retained solvents". Retained solvents are a concern when packaging food or medical products.

MELINEX 850 is an example of another heat sealable OPET film. MELINEX is a registered trademark of Imperial Chemical Industries, Ltd. It is believed that U.S. Patent 4,375,494 discloses the method of making MELINEX 850. The film is made by coextruding a polyester base layer and a heat seal layer, orienting the coextruding layers using biaxially orientation techniques, and then heating the resulting film to a temperature below the crystalline melting point of the oriented polyester but at which the heat seal layer looses its orientation to become an amorphous heat sealable layer.

Heat seal layers are also known on nonoriented multilayer films, including PET, such as that disclosed in U.S. Patent No. 4,389,450. This patent discloses a multiple layer heat sealable packaging sheet. The base layer (nonsealant layer) comprises a blend of 25%-75% of a polymer with a coefficient of friction (COF) of less than about 2, including ethylene copolymers polyester, polypropylene and nylon. The blend also includes 25%-75% of a polymer with a COF greater than 2, including ethylene acrylic acid, ethylene methylacrylate, ethylene ethyl acrylate, ethylene vinyl acetate, and ionomer. Films made according to U.S. Patent No. 4,389,450 containing 25% olefinic material blended into polyester do not yield the toughness of films of the present invention.

In copending Application Serial No. 06/759,391, the grandparent application for this case, a nonoriented coextruded heat sealable film is disclosed. A copolyester used in the heat seal layer was found to provide exceptional heat seal properties, especially when the film was laminated to paper web and used to make microwave popcorn popping bags. In that application, the base polyester layer was not required to have, nor did it have, any particular toughness characteristics when made into thin films. In copending Application Serial No. 07/050,166, the parent application for this case, nonoriented tough polyester films are disclosed. The coextrusion of such films with heat seal layers (as discussed below) is also disclosed. The present application includes a disclosure to the use of new resins in similar applications.

Heat sealable tough films are often used laminated to other materials for particular applications. For example, two common means of packaging are the use of a heat sealed pouch (such as in powdered soft drink mixes) and plastic containers with a peelable lid (such as in yogurt, individual servings of jams and jellies, etc.) The pouch or lidding material is often a composite structure formed by (1) laminating printed paper or aluminum foil to oriented PET film and (2) applying a heat seal coating to the laminated structure.

The lamination is typically made by placing an adhesive layer on the paper, aluminum foil, or even the oriented PET film and then laminating the two webs of material together. Such adhesive lamination techniques are well known. An alternative to adhesive lamination is extrusion lamination whereby the webs are bonded by a polymer extruded hot onto one of the webs. Extrusion lamination techniques are also well known.

The second step in producing flexible packaging stocks is application of the heat sealant by means of coating. The sealant coating can be applied by dissolving a heat sealable polymer in a solvent and applying it to the surface of the laminate. The laminate is then passed through an oven to evaporate the solvent. The polymer, which does not evaporate, forms a uniform heat seal coating onto the structure. A small amount of retained solvent often remains in the coating just as when a heat seal coating is applied to single layer OPET.

Besides the problem of retained solvents, such laminates are also expensive in that they use oriented films and require two converting steps to produce.

## SUMMARY OF THE INVENTION

The present invention includes a polyester film which is produced by conventional film extrusion methods and which exhibits surprising toughness without orientation.

In one aspect of the invention, the film comprises a layer between about 0.5 mil and about 5 mil thick, of tough, nonoriented polymer comprising a blend of about 95% to about 99% of a polyester and about 1% to about 5% of a polyolefin. It has been found that the addition of the small (1%-5%) amount of olefinic polymer to the polyester yields a film with surprising toughness for a non-oriented polyester.

Coextruded films of this aspect of the invention consist of the tough base layer and a heat sealant layer. The base layer is comprised of polyester with 1%-5% of an olefinic polymer blended therein. The heat sealant layer is comprised of a second polymer material such as copolyesters, ethylene vinyl acetate, ethylene acrylic acid, polyethylene and the like and not necessarily from the same group of olefinic polymers used as the additive in the base layer.

In another aspect of this invention, recently developed polyester resins either with or without olefinic polymers blended therein, are coextruded with a heat seal layer.

The multiple layer heat sealable polyester films of both aspects of the invention exhibit excellent toughness and functionality without the need of orienting the film and can be produced on conventional film extrusion equipment, which costs significantly less than orientation equipment and is easier and less costly to operate.

3

In addition, the non-oriented heat sealable coextruded polyester films of both aspects of this invention demonstrate several advantages over oriented heat sealable polyester films: (1) the films of this invention can be formed into shapes by heat and/or pressure; (2) they exhibit better tear resistance; (3) they exhibit better heat seal properties; and (4) they exhibit better surface receptivity to inks, adhesives and the like. Furthermore, compared to oriented heat sealable polyester films whereby the sealant is applied as a coating, the films of this invention have the following additional advantages: (1) they can be made in one manufacturing step and (2) the sealants contain no retained solvents.

The heat sealable, non-oriented coextruded polyester films of both aspects of this invention can be laminated to paper, aluminum foil, or another film to form pouch or lidding stocks. The use of the films of this invention to produce the pouch or lidding material does not require the usual step of applying a heat seal coating to a laminate of oriented PET film. Elimination of the coating step simplifies the process of making the composite structure and often reduces costs.

In addition, these composites are superior to heat sealable composites which incorporate a heat sealant applied as a solvent based coating in that they: (1) eliminate the coating step; (2) eliminate the need to handle solvents and (3) eliminate retained solvents in the heat sealant.

## BRIEF DESCRIPTION OF THE DRAWINGS

FIGURE 1 shows a multilayer film including a tough nonoriented polyester layer of the present invention in a two-layer "AB" structure.

FIGURE 2 shows a multilayer film of the present invention, a three-layer "ABC" structure.

FIGURE 3 illustrates a prior art flexible packaging structure comprised of an adhesive or extrusion lamination of OPET film to aluminum foil paper or film with a heat seal coating applied to the laminate.

FIGURE 4 shows a flexible packaging structure of the present invention comprised of an adhesive or extrusion lamination of the films of the present invention to a web of aluminum foil, paper or film.

## DETAILED DESCRIPTION OF THE DRAWINGS AND PREFERRED EMBODIMENTS OF THE INVENTION

The first aspect of the invention in its simplest form is a tough, nonoriented film made of a blend of polyester containing about 1% to about 5% of a polyolefin. (Unless otherwise specified, all percentages are weight percents.) The film is between about 0.5 mil and about 5 mil thick. The following examples describe films of this form.

### Example 1

A polyester polymer was extruded using the conventional chill roll cast film process. Specifically, a polyester polymer characterized by an intrinsic viscosity (IV) of 0.95 was used. The commercial polyester used was Goodyear 9506B manufactured by Goodyear Chemical Company. The polyester was placed into a 2-1/2" diameter extruder and extruded through a coathanger style cast film die onto a chrome plated, water cooled chill roll. The resultant film was wound onto a roll using a conventional film winding system. The film had a thickness of 1.0 mil (0.001 inches).

### Example 2

The film of Example 1 except 1% linear low density polyethylene ("LLDPE") was blended with the polyester prior to extrusion. The LLDPE used was Dowlex 2045, manufactured by The Dow Chemical Company.

## Example 3

The film of Example 1 except 3% LLDPE was blended with the polyester.

## Example 4

The film of Example 1 except the 5% LLDPE was blended with the polyester.

## Example 5

The film of Example 4 except a 0.80 IV polyester was used. In particular, Goodyear 8006 was utilized. Table 1 compares the tensile strength, elongation, tear resistance and puncture resistance of the films of Examples 1-5, and of 1.0 mil OPET film.

## TABLE 1

### Physical Properties of the Films from Examples 1 - 5

|  | % LLDPE in Poly-Ester | Tensile Strength ASTM D-882 | Elon-gation ASTM D-882 | Tear Re-sistance ASTM D-1922 | Puncture Resistance ASTM D-1709 |
|---|---|---|---|---|---|
| Example 1 | 0% | 5000 psi | 5% | 5g | 40g |
| Example 2 | 1% | 7000 psi | 200% | 30g | 60g |
| Example 3 | 3% | 10000 psi | 450% | 70g | 85g |
| Example 4 | 5% | 10000 psi | 450% | 70g | 85g |
| Example 5 | 3% | 6000 psi | 200% | 35g | 55g |
| 1.0 mil OPET | --- | 29000 psi | 100% | 10g | 300g |

Note the surprising increase in all the physical properties when a small amount of LLDPE is added to the polyester. The poor physical properties of the film of Example 1 has limited the commercial applications of nonoriented polyester films.

Note also that beyond approximately 3% LLDPE added to the polyester, no further improvement in physical properties are realized. Also, as the amount of LLDPE goes up, the haze level of the film increases, and above about 10%, the toughness of the film begins to decrease. Therefore, levels of about 1% to about 5% are preferred.

Some copolyesters in a nonoriented state provide tougher film than comparable nonoriented polyesters. For example, Eastman 6751, a PCTA copolyester, has improved toughness over straight polyester.

Also, even in nonoriented polyesters without LLDPE, polyesters with a greater intrinsic viscosity (IV) result in films with a greater toughness. Thus, there may be nonoriented polyester films made of polyesters with an IV of 0.95 or greater and without LLDPE which will be suitable in some applications requiring moderately tough films. For example, a new Goodyear CT1006B polyester with an IV of 1.04 was found to provide, without orientation and without the use of LLDPE, a film of good toughness. Also, an article entitled "DuPont Unveils Toughened Polyester", published in Packaging, pp.84-87 (Jan. 1987), describes a new "Selar" polyester which reportedly may be cast into moderately tough films. The use of such resins in coextruded films is discussed below in more detail with regard to the second aspect of the invention.

The present invention has been found, however to surprisingly improve the toughness of polyesters of a wide variety of IV. Low IV polyesters, even when LLDPE is added, may not be tough enough for some appli cations. Therefore, it is thought that the present invention will be most useful when utilizing polyesters with an IV of between about 0.7 and about .95.

The reason why small amounts of polyolefin in the polyester provides films of superior toughness is not yet fully understood. It is known, however, that in addition to LLDPE, ethylene vinyl acetate copolymers ("EVA") also provide similar improvements in the toughness of nonoriented polyester films. It is thought that the olefin acts as a nucleating agent which increases the crystallinity, hence toughness, of the extruded film. Since olefins are incompatible with polyesters, they act as sites for formation of crystalline regions. Therefore, it is believed that a wide variety of polyolefin may be blended in small amounts in polyester films and provide similar surprising results.

With regard to the second aspect of the present invention, it has been found that recent advancements in the development of new polyester polymers by manufacturers such as Eastman Chemical, Goodyear Chemical and E.I. DuPont De Nemours have produced polyester resins which yield relatively tough films without orientation or the need to blend in a small amount of olefin. As one example, Goodyear 9506C PET was extruded with 0% and 3% LLDPE blended therein. Table 1A compares the physical properties of these films compared to conventional cast PET containing 0% olefin.

## TABLE 1A

| POLYMER | % LLDPE IN POLYESTER | TENSILE STRENGTH ASTM D-882 | ELONGATION ASTM D-882 | TEAR RESISTANCE D-1922 |
|---|---|---|---|---|
| Example 1 (9506B) | 0% | 5,000 psi | 5% | 5g |
| 9506C | 0% | 13,000 psi | 460% | 58g |
| 9506C | 3% | 13,000 psi | 460% | 70g |

Note that the addition of the olefin still yields improved tear resistance, an important property in many applications such as lidding stocks.

It is reported that Goodyear's 9506C resin is a TPA based high molecular weight poly(ethylene terephtalate) resin optimized for high strength and impact resistance for a wide range of applications including industrial yarns, monofilament, strapping, and dual ovenable container applications. It is reportedly produced by a melt phase polymerization followed by a special secondary polymerization process for achieving higher purity and molecular weights.

Another example of new PET polymers which yield tough film without the addition of olefins is SELAR PT polymer manufactured by E.I. DuPont De Nemours, hereafter referred to as "DuPont." SELAR PT is a trademark of DuPont. DuPont has claimed that films produced from SELAR PT polymers yield tensile and elongation properties of 7,000 psi and 500%, respectively.

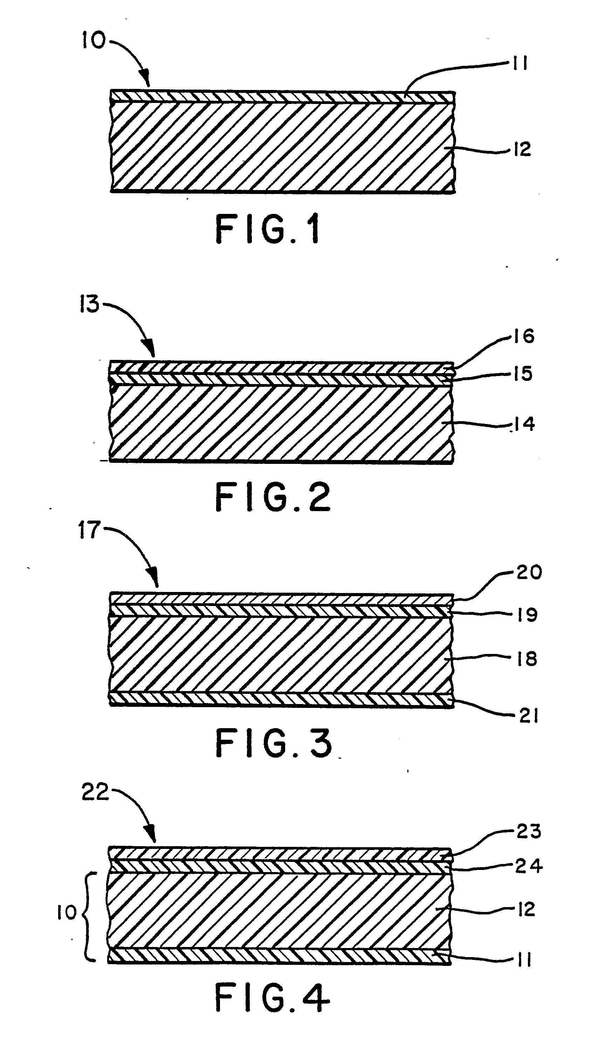

The tough polyester of both aspects of the invention may also be used in other embodiments of the invention, for example, the tough polyester may typically be part of a coextrusion of a heat sealable film, exemplified in FIG. 1 in which a two-layer film is generally designated 10. Layer 11 of film 10 is a heat sealant layer "A" consisting of a copolyester or olefinic polymer. Layer 12 of film 10 is the base layer "B" consisting of a polyester polymer with a small amount of polyolefin blended therein. The base layer 12 provides the film with stiffness, tear resistance and toughness. As illustrated in Examples 1-5, these properties are affected by 1) the polyester polymer used and 2) the amount of polyolefin added to the polyester.

Various heat seal layers have been experimented with to find suitable heat seal layers that can be coextruded with both the novel polyester-polyolefin blend material of the first aspect of the invention and the new resins used in the second aspect of the invention. Examples 6-10 illustrate various experimental heat sealant combinations, and Tables 2-5 illustrate some of the results of the investigation. The heat seal layers used with the base layers of the first aspect of the invention were found to provide similar properties when used with base layers of the second aspect of the invention.

## Example 6

A base layer 12 consisting of a polyester/LLDPE polymer blend of Example 3 was coextruded with a heat sealant layer 11 consisting of a modified ethylene vinyl acetate (EVA) polymer. The commercial modified EVA used in this example was Plexar 326 (commonly used as a tie layer for polyester base layers), manufactured by USI Chemicals Company. The polymer for the base layer 12 was placed into a first extruder and the polymer for the heat sealant layer 11 was placed into a second extruder and the polymers were coextruded through a feedblock and cast film die and then quenched on a chilled roll. The resultant film had a total thickness of 1.0 mil (0.001 inches), of which 0.8 mil was the base layer 12 and 0.2 mil was the heat sealant layer 11.

## Example 7

The film of Example 6 except a non-modified EVA was used for the heat sealant layer 11. Specifically, USI 3404, manufactured by USI Chemical Company, was used for this example.

Table 2 compares the heat seal properties of the films of Examples 6 and 7.

### TABLE 2

### Seal Strength (g/in) for Example 6 & 7 Films

|  | Film to Film | Film to Polystyrene | Film to Polypropylene |
|---|---|---|---|
| Example 6 | 1000g | 800g | 900g |
| Example 7 | 600g | 500g | 600g |

Note that the film using the modified EVA, Example 6, exhibits superior sealing properties compared to the non-modified EVA of Example 7. This occurs as the bond between the heat sealant layer and the base layer is weaker for the non-modified EVA. When the sealed samples are peeled apart, the non-modified EVA separates from the base polyester. Therefore, a preferred embodiment of this invention is the use of a modified olefin, such as EVA modified to adhere to polyester, as the heat sealant layer 11.

Commonly known tie layers are useful for structures of the present invention when the base layer is coextruded with a noncompatible layer (heat seal or otherwise). Three layer films utilizing a tie layer allow the use of heat sealant polymers which normally form a poor bond to the base polyester, and hence have poor sealing properties.

For example, FIG. 2 illustrates a three-layer film generally designated 13. Layer 14 of film 13 is the base layer comparable to layer 12 of film 10 (FIG. 1). Layer 16 is a heat sealant layer comparable to layer 11 of film 10. Layer 15 is a tie layer which bonds layers 14 and 16.

The three-layer approach broadens the selection of polymers used for the heat sealant layer of films of this invention. The following examples further demonstrates this utility.

## Example 8

The film of Example 6 (FIG. 1) except an ethylene methyl acetate (EMA) is used as the heat sealant layer 11. No tie layer is used between this heat seal layer and the base layer 12.

## Example 9

A base layer 14 (FIG. 2) of the polyester/LLDPE blend of Example 3 is coextruded with a tie layer 15 of a modified olefin and a heat sealant layer 16 of EMA.

The bond of the heat sealant 16 to the base layer 14 of Example 9 would be superior to that between the heat sealant 11 and the base layer 12 of the film of Example 8. This is a result of the use of tie layer 15.

The following example illustrates the use of a copolyester polymer as the heat sealant layer rather than a olefinic polymer used in the previous examples.

## Example 10

A base layer consisting of a polyester polymer characterized by an intrinsic viscosity (IV) of 0.95 with 3% LLDPE blended therein was coextruded with a heat sealant layer consisting of a copolyester. The commercial 0.95 IV polyester used in this example was Goodyear 9506B manufactured by Goodyear Chemical Company. The copolyester heat sealant layer was poly (ethylene-co-diethylene terephthalate). One commercial copolyester of this formulation is Kodabond 5116 manufactured by Eastman Chemical Products, Inc. Kodabond is a registered trademark of Eastman Chemical Products, Inc.

The use of a copolyester as the heat sealant layer has advantages over the olefinic sealants of the previous examples when sealing to non-olefinic substrates, such as tubs and trays formed from polyester.

Whether one uses a olefinic versus a copolyester heat sealant will depend on the intended application. To demonstrate the differences in utilizing a olefinic heat sealant versus a copolyester heat sealant, the films of Example 6, containing an olefinic heat sealant, and of Example 10, containing a copolyester heat sealant, were sealed to seven common materials used for containers. The seal strengths are listed in Table 3.

## TABLE 3

### Seal Strengths (gram/inch)

| Film | Sealed to | Sealing Temperature (°F) | | | | |
|---|---|---|---|---|---|---|
| | | 200 | 250 | 300 | 350 | 400 |
| Example 10 | PVC | 0 | 0 | 700g | 1200g | 1600g |
| Example 6 | | 1300g | 1800g | 1800g | 2000g | 2200g |
| Example 10 | PETG | - | 1100g | 1500g | 2000g | 2500g |
| Example 6 | | 400g | 800g | 900g | 1100g | 1400g |
| Example 10 | High Impact | 0 | 0 | 0 | 0 | 0 |
| Example 6 | Polystyrene | - | 900g | 1150g | 1350g | 1350g |
| Example 10 | Polypropylene | 0 | 0 | 0 | 0 | 0 |
| Example 6 | | - | 200g | 300g | 800g | 900g |
| Example 10 | PVDC | - | 1300g | 1800g | 1800g | 1800g |
| Example 6 | | - | 1100g | 1250g | 1400g | 1400g |
| Example 10 | Crystallized | - | 100g | 400g | 1000g | 1400g |
| Example 6 | Polyester | 0 | 0 | 0 | 0 | 0 |
| Example 10 | High Density | 200g | 700g | 1050g | 1150g | 1250g |
| Example 6 | Polyethylene | 0 | 0 | 0 | 0 | 0 |

Note: Seals made with 0.25" wide seal bar at 40psi for 0.5 sec dwell.
Note that the films of Examples 6 and 10 exhibit often widely different seal strengths to the various substrates. For example, for crystallized polyester trays, the film of Example 10 would be preferred versus the film of Example 6.

The films of the present invention demonstrate superior sealing properties compared to commercially available heat sealable OPET films. Table 4 compares the seal properties the film of Example 6 to SCOTCHPAK film when sealed to high impact polystyrene ("HIPS"). Table 5 compares seal strength of the film of Example 10 compared to MELINEX 850 and OL MYLAR when sealed to crystallized polyester trays.

9

## TABLE 4

### Seal Strength (g/in)

| Film | Sealed to | Sealing Temperature (°F) | | | |
|------|-----------|------|------|------|------|
| | | 250 | 300 | 350 | 400 |
| Example 6 | High Impact | 1000g | 1300g | 1450g | 1450g |
| SCOTCHPAK | Polystyrene | 900g | 1100g | 1350g | 1400g |

NOTE: Seals made with 0.25" a wide seal bar at 40psi for 0.5 sec.

## TABLE 5

### Seal Strength (g/in) to Crystallized Polyester

| | Sealing Temperatures | | |
|------|------|------|------|
| | 300°F | 350°F | 400°F |
| MELINEX 850 | 18g | 200g | 300g |
| OL MYLAR | 350g | 350g | 545g |
| Example 10 | 145g | 360g | 1050g |

NOTE: Seals made with 0.25" a wide seal bar at 40psi for 0.5 sec.

The films of the present invention demonstrate superior tear resistance compared to heat sealable OPET films. Table 6 compares the tear resistance of MELINEX 850 and OL MYLAR to film of Example 10 made at a thickness of 0.0006".

## TABLE 6

| Film | Thickness | Elmendorf Tear |
|------|-----------|----------------|
| MELINEX 850 | 0.0006" | 6g |
| OL MYLAR | 0.0006" | 6g |
| Example 10 | 0.0006" | 50g |

As shown in Table 1A, the tear resistance of films made from the newly developed resins used in the second aspect of the invention are superior to films made of conventional resins. This improved tear resistance is manifest in coextruded films comparable to the film of Example 10.

FIG. 3 illustrates a common construction for a flexible packaging materials generally designated by 17. The laminate 17 is made from a first web 20 laminated to a second web 18 by a lamination bonding layer 19. The lamination bonding layer 19 may be either an adhesive or an extrusion as discussed in the background section of the specification. A heat seal coating 21 is applied by solvent coating techniques, also described in the background section. The heat seal coating 21 of these common composites often contains retained solvents.

The films of both aspects of the present invention can be used to form a laminated flexible packaging stock which can replace the laminated and coated stock of FIG. 3 described above. For example, FIG. 4 illustrates a laminated stock generally referred to as 22, which is another embodiment of the present invention. Laminate 22 is comprised of first web 23 laminated to a film of this invention designated as 10 from FIG. 1. The web 23 may be aluminium foil, paper, oriented polyester, oriented polypropylene or a nonoriented polymer film. Web 23 may also consist of a multilayer structure where various functional layers are used to achieve desired characteristics in the final laminate.

The web 23 and film 10 are bonded by either adhesive or extrusion lamination techniques by lamination bonding layer 24, similar to bonding layer 19 of FIG. 3. Since film 10 already has a heat sealant layer, 11, no heat seal coating step is necessary as in making structure 17.

Structure 22 has many advantages over the more conventional structure 17: (1) it can be constructed in one less manufacturing step, i.e., no heat seal coating step; (2) it can often be made at lower cost due to elimination of the coating step; and (3) the sealant layer 11 of structure 22 is comprised of a pure polymer and therefore contains 0% retained solvents.

The presence of retained solvents in heat seal layers is often objectionable as the solvents are often hazardous materials such as toluene, methyl ethyl ketone or ethyl acetate.

The following examples will serve to further describe the advantages of flexible packaging structures produced with films of both aspects of the present invention over those made by conventional means. The examples describe a packaging lidstock for individual servings of jam, jelly and other condiments.

## Example 11

(for comparison)

This example describes the lidstock produced by well known means and illustrated by FIG. 3. Referring to FIG. 3, aluminum foil designated as 20, of a thickness of 0.0003 inches, was first laminated to 0.00048 inch thick OPET film 18 by adhesive 19. Subsequently, ethylene vinyl acetate polymer dissolved in solvent ethyl acetate was coated onto film 18 of the laminate. The laminate was passed through an oven wherein the majority of the ethyl acetate solvent was evaporated leaving the EVA polymer as a uniform heat seal coating, 21.

## Example 12

This example describes the manufacture of a lidding stock using a film of the first aspect of the present invention, specifically as described in Example 6, with a structure as shown in FIG. 4. The film of Example 6 was adhesively laminated to 0.0003 thick aluminum foil.

## Example 13

The structure of Example 12 except the film of Example 10 was laminated to 0.0003 thick aluminum foil.

The laminate of Example 11 was analyzed by gas chromatography for the presence of the solvent ethyl acetate and found to contain 2000 mg/ream retained solvent.

The cost of manufacturing the film of Example 11 was approximately 22% more than the cost of manufacturing the films of Examples 12 and 13.

To demonstrate the comparable functionality of the lidding stocks of Examples 11 and 12, the stocks were heat sealed to rigid high impact polystyrene (HIPS). HIPS is commonly used for the formed containers used in the packaging of jams, jellies, ketchup and other condiments and foodstuffs. Table 7 contains seal strengths data from these examples:

0 291 065

## TABLE 7

### Seal Peel Strength (g/in)
### Examples 11 & 12 to HIPS

| | Sealing Temperature | | |
| --- | --- | --- | --- |
| | 300 F | 350 F | 400 F |
| Example 11 | 800 | 1100 | 1500 |
| Example 12 | 1200 | 1400 | 1630 |

Note that the laminate of Examples 12 yields slightly better seal properties than the laminate of Example 11. Laminates made using a base layer of the second aspect of the present invention and the heat seal layers as in Examples 12 and 13 would provide similar results as disclosed in Table 7.

The preferred embodiments of the invention disclosed herein are illustrative of the invention and are capable of variation without departing from the scope of the invention. It is intended, therefore, that the following claims, including all equivalents, define the invention.

## Claims

1. A film comprising:
(a) a layer between about 0.5 mil and about 5 mil thick of tough, nonoriented polymer comprising a blend of
(i) about 95 to 99% of a polyester and
(ii) about 1% to about 5% of polyolefin.

2. The film of claim 1 wherein the polyolefin comprises linear low density polyethylene (LLDPE).

3. The film of claim 2 wherein the polyester comprises about 97% of the tough, nonoriented polymer layer and the LLDPE comprises about 3% of the tough, nonoriented polymer layer.

4. The film of claim 1 wherein the polyester has an intrinsic viscosity (IV) of between about 0.70 and about 0.95.

5. The film of claim 1 wherein the film comprises a coextruded heat sealable film having a heat seal layer coextruded with the tough nonoriented polymer layer.

6. A coextruded, heat sealable, nonoriented film comprising:
(a) a tough base layer comprising a blend of polyester and polyolefin in a ratio of polyester to polyolefin of between about 99:1 to 19:1, and
(b) a heat seal layer comprising a modified olefin polymer.

7. The coextruded film of claim 6 wherein the polyolefin in the base layer comprises LLDPE.

8. The coextruded film of claim 7 wherein the ratio of polyester to base layer olefin is about 97:3.

9. The coextruded film of claim 6 wherein the modified olefin polymer in the heat seal layer comprises ethylene vinyl acetate chemically modified to adhere to polyester.

10. The coextruded film of claim 6 wherein the polyolefin in the base layer comprises ethylene vinyl acetate copolymer.

11. A coextruded, heat sealable, nonoriented film comprising:
(a) a tough base layer comprising a blend of polyester and polyolefin in a ratio of polyester to polyolefin of between about 99:1 to 19:1, and
(b) a heat seal layer comprising a copolyester.

12. The coextruded film of claim 11 wherein the polyolefin in the base layer comprises LLDPE.

13. The coextruded film of claim 12 wherein the ratio of polyester to base layer olefin is about 97:3.

14. The coextruded film of claim 11 wherein the copolyester comprises ethylene-co-diethylene terephthalate.

15. A composite heat sealable flexible packaging material comprising:
(a) a heat sealable, coextruded nonoriented film comprising
(i) a tough base layer comprising a blend of polyester and a polyolefin in a ratio of polyester to polyolefin of between about 99:1 to 19:1, and
(ii) a olefin heat seal layer on one side of said base layer;
(b) a lamination bonding layer on said base layer opposite said heat seal layer; and

12

(c) a web of material selected from the group consisting of aluminum foil, paper, oriented polyester, oriented polypropylene and nonoriented polymer film laminated to said lamination bonding layer.

16. The composite of claim 15 wherein the heat seal layer comprises a modified olefin polymer.

17. The composite of claim 15 wherein the heat seal layer comprises a copolyester.

18. The composite of claim 15 wherein the polyolefin in the base layer comprises LLDPE at a ratio of polyester to LLDPE of about 97:3.

19. The composite of claim 15 wherein the lamination bonding layer comprises an extrusion lamination.

20. The composite of claim 15 wherein the lamination bonding layer comprises an adhesive lamination.

21. A coextruded, heat sealable, nonoriented film comprising:

(a) a tough base layer comprising a nonoriented polyester, which in film form has a tensile strength of 7,000 psi or more, and

(b) a heat seal layer selected from the group consisting of a modified olefin polymer and a copolyester.

22. The coextruded film of claim 21 wherein the modified olefin polymer in the heat seal layer comprises ethylene vinyl acetate chemically modified to adhere to polyester.

23. The coextruded film of claim 21 wherein the copolyester comprises ethylene-co-diethylene terephthalate.

24. The coextruded film of claim 21 wherein the polyester comprises a TPA based high molecular weight PET resin with a tensile strength, in film form, of about 13,000 psi.

25. A composite heat sealable flexible packaging material comprising:

(a) a heat sealable, coextruded nonoriented film comprising

(i) a tough base layer comprising a nonoriented polyester; and

(ii) a heat seal layer on one side of said base layer;

(b) a lamination bonding layer on said base layer opposite said heat seal layer; and

(c) a web of material selected from the group consisting of aluminum foil, paper, oriented polyester, oriented polypropylene and nonoriented polymer film laminated to said lamination bonding layer.

26. The composite of claim 25 wherein the heat seal layer comprises a modified olefin polymer.

27. The composite of claim 25 wherein the heat seal layer comprises a copolyester.

28. The composite of claim 25 wherein the lamination bonding layer comprises an extrusion lamination.

29. The composite of claim 25 wherein the lamination bonding layer comprises an adhesive lamination.

10

11

12

**FIG.1**

13

16

15

14

**FIG.2**

17

20

19

18

21

**FIG.3**

22

23

24

12

10

11

**FIG.4**